# EUROPÄISCHE PATENTSCHRIFT

(11) **EP 2 598 730 B1**
(45) Veröffentlichungstag und Bekanntmachung des Hinweises auf die Patenterteilung: **05.12.2018**
(21) Anmeldenummer: 11734107.3
(22) Anmeldetag: 20.07.2011
(51) Int. Cl.: F01N 3/28, F01N 3/20, F01N 3/04, F01N 3/10, F01N 3/02

(54) **VORRICHTUNG ZUR MOTORNAHEN ABGASBEHANDLUNG**
APPARATUS FOR EXHAUST GAS TREATMENT
APPAREIL DE TRAITEMENT DES GAZ D'ÉCHAPPEMENT

(30) Priorität: 28.07.2010 DE 102010032576
(43) Veröffentlichungstag der Anmeldung: 05.06.2013
(73) Patentinhaber: Continental Automotive GmbH, 30165 Hannover (DE); Eberspächer Exhaust Technology GmbH & Co. KG, 66539 Neunkirchen (DE)
(72) Erfinder: NAGEL, Thomas, 51766 Engelskirchen (DE); KRUSE, Carsten, 53842 Troisdorf (DE); MÜLLER, Jörg-Uwe, 70794 Filderstadt (DE); HÄNISCH, Jan, 73765 Neuhausen (DE); OESTERLE, Jörg, 89150 Laichingen (DE); LEICHT, Sebastian, 72406 Bisingen (DE)
(74) Vertreter: Rössler, Matthias
(86) Internationale Anmeldenummer: PCT/EP2011/062488
(87) Internationale Veröffentlichungsnummer: WO 2012/013562

(56) Entgegenhaltungen:
- EP-A1- 1 333 908
- EP-A2- 2 119 881
- WO-A1-2010/082308
- WO-A2-2008/068632
- DE-U1-202007 007 910
- DE-U1-202008 001 547
- US-A1- 2008 271 442

## Beschreibung

Die vorliegende Erfindung betrifft eine Vorrichtung zur motornahen Abgasbehandlung, wobei insbesondere ein System zur selektiven katalytischen Reduktion (SCR) angegeben werden soll, bei dem das Abgas mit einem Additiv, insbesondere einem flüssigen Reduktionsmittel, behandelt wird.

Es ist bekannt, Abgase von Diesel-Motoren hinsichtlich der Stickoxidbelastung zu behandeln. Zu diesem Zweck wird das Abgas beispielsweise mit Ammoniak und/oder Harnstoff (Reduktionsmittel) behandelt, um die im Abgas enthaltenen Stickoxide zu reduzieren, so dass diese in Stickstoff und Sauerstoff umgewandelt werden. Zu diesem Zweck wird zunächst Ammoniak bzw. Harnstoff in dem Abgasstrom verteilt und dieses Gemisch über einen entsprechenden Katalysator geleitet. Dieser so genannte SCR-Katalysator unterstützt diese Reduktion von Stickoxiden. Da gerade bei mobilen Anwendungen bevorzugt ein Additiv mitgeführt wird, welches schließlich Ammoniak freigesetzt - ein so genannter Reduktionsmittelvorläufer - ist ggf. vorab eine chemische Umsetzung des Reduktionsmittelvorläufers (Harnstoffs) in das Reduktionsmittel (Ammoniak) erforderlich. Dies kann rein thermisch erfolgen, in dem der Ammoniak über eine bestimmte Grenztemperatur erhitzt wird (Thermolyse). Es ist aber auch möglich, hierzu Katalysatoren einzusetzen, die die so genannte Hydrolyse von Harnstoff motivieren. In diesem Fall wird bevorzugt flüssiger Harnstoff zunächst über einen Hydrolysekatalysator geführt, wobei Ammoniak gebildet wird, der gemeinsam mit dem Abgas dann hin zum SCR-Katalysator geführt wird. Eine derartige Abgasbehandlungsvorrichtung ist aus der US 2008/271442 A1 bekannt.

Darüber hinaus ist zu berücksichtigen, dass das Abgas weitere Schadstoffkomponenten hat, insbesondere Kohlenwasserstoffe und/oder Kohlenmonoxid, die ebenfalls katalytisch umgesetzt werden sollen. Zu diesem Zweck werden insbesondere so genannte Oxidationskatalysatoren (oder so genannten DOC) eingesetzt.

Darüber hinaus sind dem Abgas vielfach Partikel beigemengt, die ebenfalls aus dem Abgasstrom entfernt werden sollen. Hierfür können entsprechende Filter, Partikelabscheider, etc. vorgesehen sein.

Gerade bei Diesel-Motoren ist zu berücksichtigen, dass das Abgas eine relativ geringe Temperatur hat. Die vorstehend genannten katalytischen Reaktionen finden jedoch erst ab einer bestimmten Grenztemperatur statt, der so genannten Light-off-Temperatur des jeweiligen Katalysators. Daher ist es wünschenswert, die katalytisch motivierten Reaktionen möglichst motornah ablaufen zu lassen, weil hier das vom Motor kommende Abgas noch vergleichsweise hohe Temperatur hat. Dies erfordert jedoch, dass besonders platzsparende Vorrichtungen angegeben werden, die zumindest teilweise in den Motorraum eines Kraftfahrzeugs integrierbar sind. Hierbei tritt insbesondere auch das Problem auf, dass das Abgas über einen sehr kurzen Strömungsweg möglichst vollständig von den vorstehend genannten Schadstoffen bzw. Partikeln befreit werden soll.

Hiervon ausgehend ist es Aufgabe der vorliegenden Erfindung, die mit Bezug auf den Stand der Technik geschilderten technischen Probleme zumindest teilweise zu lösen. Insbesondere soll eine Vorrichtung angegeben werden, die eine motornahe Abgasbehandlung mit geringem Bauraum ermöglicht. Außerdem soll auch erreicht werden, dass im Abgasstrom möglichst schnell (auf engem Raum) eine Umwandlung des Additivs in ein Reduktionsmittel für das Abgas, insbesondere für die Umwandlung von einer Harnstoff-Wasser-Lösung hin zu Ammoniak, erreicht wird, wobei nachfolgend rasch eine Vermischung des Ammoniaks mit dem Abgas erfolgen kann.

Diese Aufgaben werden gelöst mit einer Vorrichtung gemäß den Merkmalen des Patentanspruchs 1. Weitere vorteilhafte Ausgestaltungen der Vorrichtung sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung und gibt weitere Ausführungsbeispiele an.

Bei der erfindungsgemäßen Vorrichtung zur motornahen Abgasbehandlung sind in einer Abgasleitung eine Ringstruktur und eine Leitstruktur vorgesehen. Dabei werden mit einer Innenwand in der Ringstruktur eine innere Strömungspassage und eine äußere Strömungspassage gebildet. Die Innenwand und die Leitstruktur bilden einen Spalt, so dass nur eine begrenzte Sekundärströmung des Abgases durch die innere Strömungspassage geleitet wird.

Die Vorrichtung betrifft insbesondere ein Modul einer Abgasleitung, das beispielsweise über Flansche hin zu benachbarten Teilen des Motors und/oder des Abgasbehandlungssystems angeschlossen werden kann. Die Abgasleitung weist dabei insbesondere einen mehrfach gewundenen Verlauf auf, damit eine motornahe Anordnung unter den begrenzten Platzverhältnissen im Motorraum eines Kraftfahrzeugs ermöglicht ist.

Die Abgasleitung weist hierbei zumindest eine Ringstruktur auf. Die Ringstruktur hat eine Innenwand, die für das hindurchströmende Abgas eine innere Strömungspassage und eine äußere Strömungspassage ausbildet. Dabei ist bevorzugt, dass die innere Strömungspassage in etwa zylinderförmig und die äußere Strömungspassage nach Art eines konzentrischen Rings außen um die innere Strömungspassage ausgebildet ist. Insoweit bildet die Innenwand selbst bevorzugt ein im Wesentlichen zylindrisches Rohr, das sich über einen gewünschten Bereich in Strömungsrichtung des Abgases erstreckt. Die Ringstruktur weist daher ganz besonders bevorzugt eine zylindrische Außenwand und eine zylindrische Innenwand auf, die konzentrisch zueinander angeordnet und miteinander in dieser Position fixiert sind. Strömt das Abgas nun auf eine solche Ringstruktur zu, wird ein Teil des Abgases durch die äußere Strömungspassage und ein Teil des Abgases durch die innere Strömungspassage hindurch geleitet. Welcher Anteil durch die innere Strömungspassage und welcher Anteil durch die äußere Strömungspassage hindurchströmt, hängt üblicherweise von dem Strömungsprofil des ankommenden Abgasstroms bzw. der konkreten Anströmrichtung des Abgases ab. Gerade für den Fall, dass eine schräge Anströmung der Ringstruktur erfolgt, ist darauf zu achten, dass gleichwohl eine gleichmäßige Beströmung bzw. eine Beströmung der inneren Strömungspassage und der äußeren Strömungspassage mit den gewünschten Anteilen erreicht wird.

Zu diesem Zweck ist hier eine Leitstruktur für das Abgas vorgesehen, die mit der Innenwand der Ringstruktur zusammenwirkt, so dass beide miteinander einen Spalt bilden, der nur eine begrenzte Sekundärströmung des Abgases durch die innere Strömungspassage zulässt. Insoweit ist die Leitstruktur insbesondere nicht mit der Ringstruktur verbunden, sondern mit der Abgasleitung bzw. weiteren Komponenten der Vorrichtung. Gerade durch die Bereitstellung eines vorgegebenen Spaltmaßes ist ermöglicht, dass nur ein sehr kleiner Anteil des Abgases in die innere Strömungspassage eintritt, dort aber gleichwohl ausreichend Raum zur Behandlung des einströmenden Abgases geschaffen ist. Somit wird im Eintrittsbereich der inneren Strömungspassage erfindungsgemäß eine Art Drossel gebildet. Mit dieser präzisen Einstellung einer Primärströmung durch die äußere Strömungspassage und der kleinen, begrenzten Sekundärströmung durch die innere Strömungspassage kann eine gezielte gleichzeitige Behandlung des Abgasstroms in den parallelen Strömungspassagen erreicht werden.

Hierbei ist besonders bevorzugt, dass der Spalt nach Art eines Ringspalts konzentrisch zur Innenwand ausgebildet ist. Das heißt mit anderen Worten insbesondere, dass der Ringspalt radial innen angrenzend zur Innenwand ausgebildet ist und im Wesentlichen in Umfangsrichtung ein gleichbleibendes Spaltmaß hat.

Weiter ist bevorzugt, dass die Leitstruktur nach Art einer Hülse ausgebildet und so angeordnet ist, dass die Innenwand und die Hülse sich radial teilweise überdecken. Ganz besonders bevorzugt ist, dass die Leitstruktur bzw. Hülse teilweise in die Innenwand der Ringstruktur eintaucht bzw. sich die Leitstruktur erfindungsgemäß in die innere Strömungspassage der Innenwand hinein erstreckt. So kann, gerade bei einer zylindrischen Ausführung der Innenwand und einer zylindrischen Ausführung der Hülse, ein Ringspalt zwischen der Innenwand und der Hülse gebildet werden, der sich ausgehend von einer Stirnseite der Innenwand über einen vorgegebenen Bereich bis in die innere Strömungspassage hinein erstreckt.

Grundsätzlich ist bevorzugt, dass die Leitstruktur und die Innenwand zusammen einen Ringspalt bilden, der im Wesentlichen ebenfalls zylindrisch ausgeführt ist. Ganz besonders bevorzugt ist auch, dass die Innenwand über eine Stirnfläche der Ringstruktur übersteht und die Leitstruktur sich in diesen hervorstehenden Teil der Innenwand hinein erstreckt, so dass erfindungsgemäß für das anströmende Abgas eine Art Labyrinth (mäanderförmiger Strömungspfad) gebildet ist. Der Spalt in diesem Labyrinth kann so eingestellt werden, dass nur eine sehr begrenzte Sekundärströmung des Abgases dort hindurchströmt und die innere Strömungspassage erreicht.

Gemäß einer Weiterbildung der Vorrichtung wird vorgeschlagen, dass eine Additivzugabe vorgesehen ist, die in die innere Strömungspassage ein Additiv zugeben kann. Bei dem Additiv handelt es sich bevorzugt um eine Flüssigkeit. Ganz besonders bevorzugt ist hier eine Additivzugabe, die eine Harnstoff-Wasser-Lösung in die innere Strömungspassage eingeben kann. Dabei ist besonders bevorzugt, dass sich die Additivzugabe durch die Abgasleitung hindurch erstreckt und von der Leitstruktur umgeben ist. Somit kann die Leitstruktur insbesondere der Additivzugabe direkt oder einem die Additivzugabe umgebenden Bereich der Abgasleitung zugeordnet sein. Weiterhin ist bevorzugt, dass die Anordnung der Additivzugabe, der Leitstruktur und der Innenwand so ausgeführt ist, dass das zugegebene Additiv nur der begrenzten Sekundärströmung des Abgases beigemengt wird. Die Sekundärströmung ist in diesem Zusammenhang insbesondere so gewählt, dass damit gerade die zur Umsetzung des Additivs erforderliche Menge bereitgestellt wird, so dass gerade die gewünschten Effekte hinsichtlich Thermolyse und/oder Hydrolyse erreicht werden. Außerdem ist die Sekundärströmung ggf. auch so ausgeprägt, dass mittels des Spalts eine Grenzströmung an der Innenseite der Innenwand ausgebildet wird, so dass eine vorrangige Benetzung der Innenwand mit dem Additiv reduziert wird. Zudem kann auch die Ausbildung eines gewünschten Sprühnebels und/oder einer Vermischung des Additivs mit der Sekundärströmung durch die Ausbildung des Spalts motiviert werden. Klarstellend sei hier angemerkt, dass unter einem Additiv insbesondere ein Reduktionsmittel und/oder ein Reduktionsmittelvorläufer verstanden wird.

Darüber hinaus wird auch vorgeschlagen, dass wenigstens die innere Strömungspassage oder die äußere Strömungspassage einen Katalysator aufweist. Ganz besonders bevorzugt ist, dass sowohl die innere Strömungspassage als auch die äußere Strömungspassage jeweils mindestens einen Katalysator aufweisen. Bezüglich der äußeren Strömungspassage, durch die der überwiegende Anteil des Abgases strömt, ist bevorzugt, einen Oxidationskatalysator vorzusehen. Der Oxidationskatalysator ist insbesondere nach Art einer Wabenstruktur ausgebildet. Ganz besonders bevorzugt ist hierbei, dass die Wabenstruktur mit metallischen Folien gebildet ist, weil diese schnell die Temperatur des Abgases aufnehmen und somit der Oxidationskatalysator schnell seine Light-off-Temperatur erreicht. Im Hinblick auf die innere Strömungspassage ist bevorzugt, dass dort ein Hydrolyse-Katalysator vorgesehen ist. In Anbetracht der Tatsache, dass die Sekundärströmung sehr klein ist, kann auch dieser Hydrolyse-Katalysator mit einem kleinen Volumen ausgeführt sein. Zu diesem Zweck wird vorgeschlagen, dass der Hydrolyse-Katalysator nur in einem rückwärtigen Bereich der inneren Strömungspassage ausgeführt ist, also insbesondere deutlich kürzer als der außen vorgesehene Oxidations-Katalysator ist. Auch der Hydrolyse-Katalysator ist bevorzugt nach Art eines Wabenkörpers ausgeführt, insbesondere mit metallischen Folien. Zusätzlich kann der Hydrolyse-Katalysator eine Mischstruktur aufweisen, so dass eine Vermischung des Additivs mit dem Abgas innerhalb des Hydrolyse-Katalysators weiter motiviert wird. Mit der inneren Strömungspassage wird erfindungsgemäß demnach in Strömungsrichtung zunächst ein Spalt gebildet und dann ein Bereich, in dem sich das Additiv mit der Sekundärströmung mischen kann und schließlich einen Hydrolyse-Katalysator. Zudem ist bevorzugt, dass die Katalysatoren gemeinsam eine im Wesentlichen ebene Abströmfläche für das gesamte Abgas bilden.

Gemäß einer Weiterbildung der Vorrichtung ist in Strömungsrichtung des Abgases nach der Ringstruktur ein Mischabschnitt für das Abgas ausgebildet, wobei die Innenwand der Ringstruktur dort hineinragt und selbst eine Mischerstruktur aufweist. Der Mischabschnitt hat insbesondere die Funktion, die Primärströmung des Abgases mit der Sekundärströmung des Abgases zu vermengen, so dass insbesondere das Additiv (nun insbesondere Ammoniak) im gesamten Abgasstrom möglichst gleichmäßig verteilt wird. Ein solcher Mischabschnitt der Abgasleitung kann z. B. durch eine Querschnittsänderung der Abgasleitung erreicht werden, wobei auch die Abgasleitung selbst Umlenkstrukturen, Rippen oder dergleichen aufweisen kann, um diese Vermischung der Teilabgasströme zu begünstigen. Hier wird zudem vorgeschlagen, dass sich die Innenwand der Ringstruktur über die Rückseite der Katalysatoren hinaus in diesen Mischabschnitt der Abgasleitung hinein erstreckt. An bzw. in der Mischerwand sind nun eine oder mehrere Mischerstrukturen vorgesehen, die die Sekundärströmung aus der inneren Strömungspassage nach außen und/oder die Primärströmung von außen in die innere Strömungspassage hinein umlenken. Eine solche Mischerstruktur kann hierfür Leitschaufeln, Löcher, Strömungsverwirbeler und dergleichen aufweisen. Bevorzugt ist, dass hierbei die Innenwand einstückig ausgebildet ist. Dies ist aber nicht zwingend erforderlich.

Darüber hinaus wird auch vorgeschlagen, dass in Strömungsrichtung des Abgases nach der Ringstruktur ein katalytisch aktiver Additivreaktor vorgesehen ist, in den zugegebenes Additiv mit dem Abgas reagieren kann. Ganz besonders bevorzugt handelt es sich bei diesem katalytisch aktiven Additivreaktor um einen so genannten SCR-Katalysator, der mit dem nun im Abgas befindlichen Ammoniak und dem Abgas reagiert, so dass im Abgas enthaltene Stickoxide reduziert werden. Ganz besonders bevorzugt ist hierbei, dass das Additiv (Ammoniak) zuvor in dem Mischabschnitt gleichmäßig im Abgas verteilt wurde und nun ein im Wesentlichen über die Abgasströmung gleichmäßig ausgeführtes Gemisch dem Additivreaktor zugeführt wird. Auch dieser Additivreaktor ist bevorzugt nach Art eines Wabenkörpers ausgeführt, insbesondere mit metallischen Folien. Die entsprechende katalytisch aktive Substanz ist bspw. als Beschichtung auf den metallischen Folien ausgeführt.

Ganz besonders bevorzugt ist auch, dass der Additivreaktor zusätzlich nach Art eines Partikelabscheiders ausgebildet ist. Grundsätzlich ist dabei möglich, dass der Partikelabscheider ein so genannter Wall-Flow-Filter mit wechselseitig verschlossenen Kanälen ist. Bevorzugt ist jedoch ein so genanntes offenes Partikelabscheider-System, bei dem kein Kanal der Wabenstruktur vollständig verschlossen ist. Vielmehr sind in den Kanälen Umlenkstrukturen, Strömungsengpässe, Öffnungen, etc. vorgesehen, die einen wiederholten Durchtritt von Teilabgasmengen durch ein Filtermaterial (Vlies etc.) motivieren. Mit einem solchen offenen Partikelabscheider-System kann der Druckverlust für das Abgas bei Durchströmung des Additivreaktors gering gehalten werden. Außerdem kann hier eine Regeneration der Rußpartikel mittels der kontinuierlichen Regeneration (CRT-Verfahren) erreicht werden, weil bereits stromaufwärts und/oder im SCR-Katalysator Stickstoffdioxid generiert wird, der eine solche Umwandlung der Rußpartikel auch bei relativ niedrigen Temperaturen bewirkt.

Ganz besonders bevorzugt ist der Einsatz der Vorrichtung bei Kraftfahrzeugen, insbesondere Personenkraftfahrzeugen. Folglich wird auch ein Kraftfahrzeug aufweisend einen Motor vorgeschlagen, wobei das produzierte Abgas einen Turbolader und nachfolgend eine Vorrichtung der erfindungsgemäßen Art durchströmt. Bei dem Motor handelt es sich insbesondere um einen mit Luftüberschuss betriebenen Verbrennungsmotor, insbesondere einen Diesel-Motor. Ganz besonders bevorzugt ist die Vorrichtung unmittelbar hinter einen Turbolader angeschlossen.

Die Erfindung sowie das technische Umfeld werden nachfolgend anhand der Figuren näher erläutert. Es ist darauf hinzuweisen, dass die Figuren schematisch sind und die Erfindung nicht auf die dort gezeigten, besonders bevorzugten Ausführungsbeispiele beschränkt ist. Es zeigen:
- Fig. 1:: eine Schnittansicht durch ein erstes Ausführungsbeispiel der erfindungsgemäßen Vorrichtung,
- Fig. 2:: ein Detail einer zweiten Ausführungsvariante der erfindungsgemäßen Vorrichtung, und
- Fig. 3:: eine Übersicht zur Integration der erfindungsgemäßen Vorrichtung in ein Kraftfahrzeug.

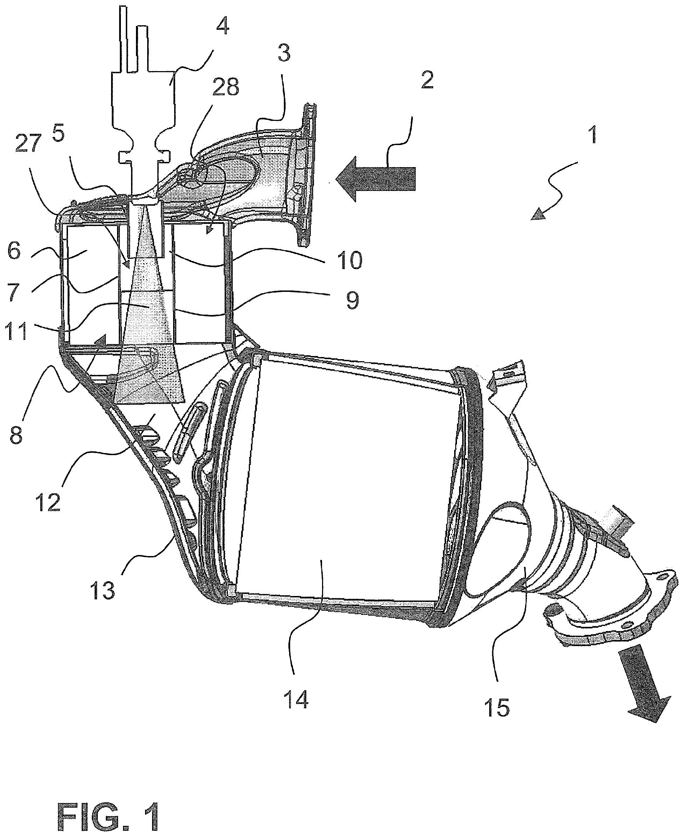

Fig. 1 zeigt nach Art eines Schnittmodells eine erfindungsgemäße Vorrichtung 1. Angedeutet ist hierbei die Strömungsrichtung 2 des Abgases durch die Vorrichtung 1 mit Pfeilen. Demnach strömt das Abgas zunächst in einem Anströmabschnitt 3 der Abgasleitung 1, wird dann durch eine Ringstruktur 8 hindurchgeführt, erreicht so den Mischabschnitt 12, und wird anschließend durch einen Additivreaktor 14 hindurchgeführt bevor das Abgas durch einen Abströmabschnitt 15 die Vorrichtung 1 wieder verlässt.

Aus dieser Darstellung ist weiter zu erkennen, dass erfindungsgemäß das Abgas über den Anströmabschnitt 3 schräg auf die Ringstruktur 8 auftrifft. Die Ringstruktur 8 bildet zentral eine zylindrische Innenwand 7 aus, die die Ringstruktur 8 in eine innere Strömungspassage 27 und eine äußere Strömungspassage 28 unterteilt. In der äußeren Strömungspassage 28 ist ein erster Katalysator 6 angeordnet, insbesondere ein nach Art eines Wabenkörpers ausgebildeter Oxidations-Katalysator zur Umwandlung von Kohlenwasserstoffen, Kohlenmonoxid und ggf. zur Bildung von Stickstoffdioxid. In der inneren Strömungspassage 27 ist rückwärtig ein zweiter (kleinerer) Katalysator 9 vorgesehen. Dieser zweite Katalysator 9 ist bevorzugt als Wabenkörper mit einer Hydrolyse-Funktion (Hydrolyse-Beschichtung) ausgeführt.

Die innere Strömungspassage 27 wird nur von einer begrenzten Sekundärströmung des Abgases durchströmt. Dies wird mittels eines Spalts 10 erreicht, der zwischen der Innenwand 7 und der Leitstruktur 5 ausgebildet ist. Bei der hier gezeigten Ausführungsvariante steht die Innenwand 7 nicht über die Stirnflächen der Ringstruktur 8 hervor. An der Stirnfläche der Ringstruktur 8, die das Abgas anströmt, ist eine Leitstruktur 5 nach Art einer Hülse vorgesehen, die sich in die Innenwand 7 hinein erstreckt. Sie ist im dargestellten Fall an die Additivzugabe 4 angefügt, so dass ein Kontakt der Primärströmung des Abgases mit dem Additiv im Anströmabschnitt 3 vermieden ist.

Um den Anteil von beispielsweise Kohlenmonoxid und/oder Kohlenwasserstoffen auch in der Sekundärströmung zu senken, ist in einer vorteilhaften Ausgestaltung stromaufwärts vor der Ringstruktur 8 und der Leitstruktur 5 ein weiterer hier nicht dargestellter Oxidationskatalysator ausgebildet, mit dem die Konzentration an unerwünschten Stoffen im Abgas, insbesondere die Konzentration von Kohlenwasserstoffen und/oder Kohlenmonoxid gesenkt werden kann. Bevorzugt ist dieser weitere Oxidationskatalysator stromaufwärts eines Turboladers ausgebildet.

Mittels der Additivzugabe 4 wird nun das Additiv 11 zu gewünschten Zeitpunkten bzw. in vorgegebenen Dosierungen in die innere Strömungspassage 27 eingeleitet, mit der Sekundärströmung vermengt und gemeinsam über den zweiten Katalysator 9 geleitet, wobei aus dem Reduktionsmittelvorläufer (Harnstoff-Wasser-Lösung) nun das gewünschte Ammoniak gebildet wird. Die parallel unterschiedlich behandelten Teile des Abgasstroms (Primärstrom und Sekundärstrom) werden nachfolgend der Ringstruktur 8 wieder zusammengeführt, nämlich in dem so genannten Mischabschnitt 12. Die Abgasleitung 13 im Mischabschnitt 12 weist unterschiedliche Erhebungen auf, um nunmehr die Vermischung beider Teilabgasströme zu begünstigen. Außerdem wird hier eine erneute Strömungsumlenkung hin zum quer angeordneten Additivreaktor 14 erreicht. Der Additivreaktor 14 ist bevorzugt nach Art eines Wabenkörpers ausgeführt, der eine SCR-Beschichtung aufweist. Außerdem kann der Additivreaktor 14 gleichzeitig als Partikelfalle ausgeführt sein. In dem Additivreaktor wird nun neben der Partikelumsetzung vorrangig auch das Verfahren der selektiven katalytischen Reduktion zur Minderung von Stickoxiden ausgeführt. Das gereinigte Abgas verlässt dann den Additivreaktor 14 über einen Abströmabschnitt 15 der Abgasleitung 13, der hier konisch ausgeführt ist. Nur der Vollständigkeit halber sei erwähnt, dass die Vorrichtung 1 zusätzlich weitere Komponenten aufweisen kann, insbesondere Sensoren, weitere Katalysatoren etc.

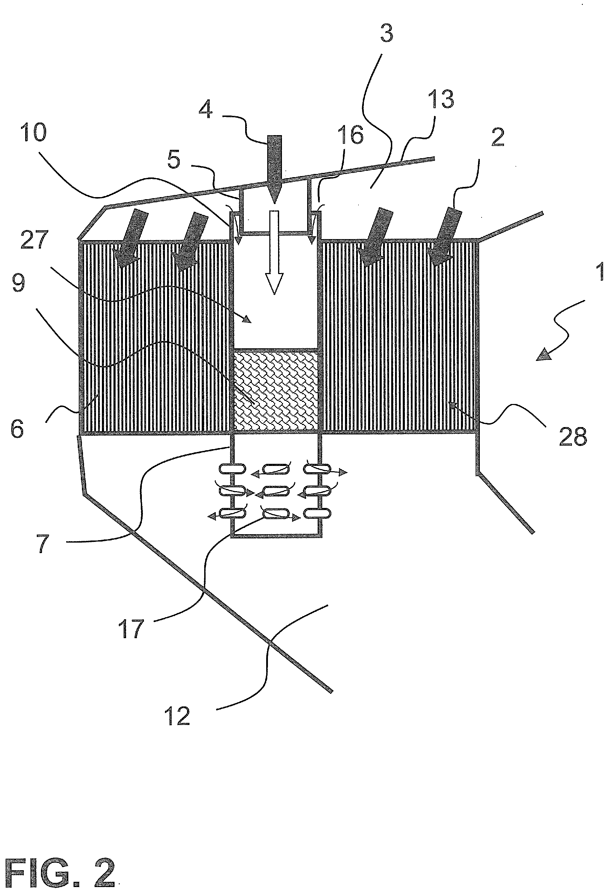

Eine etwas andere Ausführungsvariante, insbesondere im Hinblick auf die Ausgestaltung der Innenwand 7, ist in Fig. 2 dargestellt. Bei der dort offenbarten Variante ist die Innenwand 7 als zylindrisches Rohr ausgeführt, das jedoch beidseits der Ringstruktur übersteht. Einmal ragt die Innenwand 7 in den Anströmabschnitt 3 hinein und zum anderen ragt die Innenwand 7 in den Mischabschnitt 12 hinein. Im Bereich des Anströmabschnitts 3 weist die Abgasleitung 13 eine hülsenartig ausgeführte Leitstruktur 5 auf, die in den überstehenden Teilbereich der Innenwand 7 dort hineinragt. Somit überlappen sich die Leitstruktur und die Innenwand radial teilweise, so dass ein konzentrischer Ringspalt gebildet ist. Dieser Spalt 10 ist nun so bemessen, dass nur eine sehr begrenzte Sekundärströmung 16 in die innere Strömungspassage 27 einströmt, insbesondere, weil hier eine Art Labyrinth gebildet ist. Im Bereich der Abgasleitung 13 innerhalb der Leitstruktur 5 ist nun wieder die Additivzugabe 4 vorgesehen, mittels der Additiv, insbesondere Harnstoff-Wasser-Lösung, zugegeben werden kann.

Wie bereits durch die dicken Pfeile angedeutet, überströmt ein überwiegender Anteil des Abgases den ersten Katalysator 6 außen. Deshalb ist es nachfolgend wichtig, wieder eine gute Vermischung zwischen Primärströmung und Sekundärströmung 16 zu erreichen. Zu diesem Zweck ragt die Innenwand 7 in den Mischabschnitt 12 hinein und weist selbst eine Mischerstruktur 17 auf, mit der teilweise die Primärströmung in die innere Strömungspassage hineinbefördert wird und/oder die Sekundärströmung 16 aus der inneren Strömungspassage 27 radial hin zur Primärströmung umgelenkt wird. Dies erlaubt eine intensive Mischung beider Abgasströmungen in einem sehr kurzen Mischabschnitt der Abgasleitung 13.

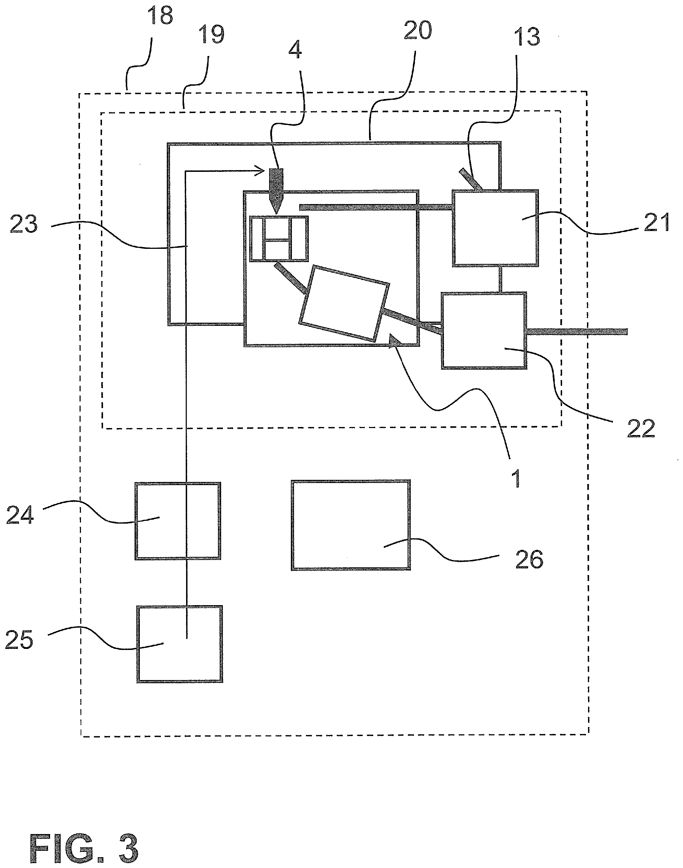

Fig. 3 soll eine mögliche Integration der erfindungsgemäßen Vorrichtung 1 in ein Kraftfahrzeug 18 veranschaulichen. Dabei ist insbesondere auch der Motorraum 19 des Kraftfahrzeugs 18 veranschaulicht, in dem ein Motor 20 vorgesehen ist, insbesondere ein Diesel-Motor. Das in dem Motor 20 produzierte Abgas strömt nun durch die Abgasleitung 13 zunächst in einen Turbolader 21, bevor es die erfindungsgemäße Vorrichtung 1 erreicht. Das Additiv ist dabei bevorzugt in einem Additivtank 25 gelagert und wird mittels eines Additivförderers 24 bedarfsgereicht über die Additivleitung 23 hin zur Additivzugabe 4 gefördert. Dieser Vorgang kann insbesondere mit einer Kontrolleinheit 26 geregelt werden, wobei die Kontrolleinheit regelmäßig Kennwerte des Motors 20 und/oder von Sensoren des Abgassystems berücksichtigt. Das Abgas, das schließlich die Vorrichtung 1 verlässt, kann bspw. noch weiteren Katalysatoren oder Abgasbehandlungseinheiten zugeführt werden, insofern ist hier ein dritter Katalysator 22 beispielhaft angedeutet, dies kann insbesondere ein Oxidations-Katalysator sein. Das schließlich gereinigte Abgas wird dann an die Umgebung abgegeben.

### Bezugszeichenliste

- 1: Vorrichtung
- 2: Strömungsrichtung
- 3: Anströmabschnitt
- 4: Additivzugabe
- 5: Leitstruktur
- 6: erster Katalysator
- 7: Innenwand
- 8: Ringstruktur
- 9: zweiter Katalysator
- 10: Spalt
- 11: Additiv
- 12: Mischabschnitt
- 13: Abgasleitung
- 14: Additivreaktor
- 15: Abströmabschnitt
- 16: Sekundärströmung
- 17: Mischerstruktur
- 18: Kraftfahrzeug
- 19: Motorraum
- 20: Motor
- 21: Turbolader
- 22: dritter Katalysator
- 23: Additivleitung
- 24: Additivförderer
- 25: Additivtank
- 26: Kontrolleinheit
- 27: innere Strömungspassage
- 28: äußere Strömungspassage

## Patentansprüche

1. Vorrichtung (1) zur motornahen Abgasbehandlung, bei der in einer Abgasleitung (13) ein Anströmabschnitt (3), eine Ringstruktur (8) und eine hülsenartig aufgeführte Leitstruktur (5) vorgesehen sind, wobei ein Abgas über den Anströmabschnitt (3) schräg auf die Ringstruktur (8) auftrifft, wobei mit einer Innenwand (7) eine innere Strömungspassage (27) und eine äußere Strömungspassage (28) in der Ringstruktur (8) gebildet sind; wobei die innere Strömungspassage (27) einen Hydrolyse-Katalysator (9) aufweist; wobei eine Additivzugabe (4) vorgesehen ist, die in die innere Strömungspassage (27) ein Additiv (11) zugeben kann, wobei die Anordnung der Additivzugabe (4), der Leitstruktur (5) und der Innenwand (7) so ausgeführt ist, dass das zugegebene Additiv (11) nur der begrenzten Sekundärströmung (16) beigemengt wird; **dadurch gekennzeichnet dass** in Strömungsrichtung (2) zunächst ein Spalt (10) gebildet ist und dann der Bereich, in dem sich das Additiv (11) mit der Sekundärströmung (16) mischt und schließlich der Hydrolyse-Katalysator (9), wobei die Leitstruktur (5) sich in die innere Strömungspassage (27) der Innenwand (7) hinein erstreckt und die Innenwand (7) und die Leitstruktur (5) den Spalt (10) und somit im Eintrittsbereich der inneren Strömungspassage (27) eine Art Drossel, insbesondere ein Labyrinth, bilden, so dass nur eine begrenzte Sekundärströmung des Abgases durch die innere Strömungspassage (27) geleitet wird.

2. Vorrichtung (1) nach Patentanspruch 1, bei der der Spalt (10) nach Art eines Ringspaltes konzentrisch zur Innenwand (7) ausgebildet ist.

3. Vorrichtung (1) nach Patentanspruch 1 oder 2, bei der die Leitstruktur (5) nach Art einer Hülse ausgeführt und so angeordnet ist, dass die Innenwand (7) und Hülse sich radial teilweise überdecken.

4. Vorrichtung (1) nach einem der vorhergehenden Patentansprüche, bei der die Leitstruktur (5) mit der Abgasleitung (13) und insbesondere nicht mit der Ringstruktur (8) verbunden ist.

5. Vorrichtung (1) nach einem der vorhergehenden Patentansprüche, wobei die Vorrichtung (1) über Flansche an benachbarte Teile des Motors angeschlossen ist, so dass eine motornahe Anordnung unter den begrenzten Platzverhältnissen im Motorraum eines Kraftfahrzeugs möglich ist.

6. Vorrichtung (1) nach Patentanspruch 5, bei der sich die Additivzugabe (4) durch die Abgasleitung (13) hindurch erstreckt und von der Leitstruktur (5) umgeben ist.

7. Vorrichtung (1) nach Patentanspruch 5 oder 6, bei der die Leitstruktur (5) an die Additivzugabe (4) angefügt ist.

8. Vorrichtung (1) nach einem der Patentansprüche 5 bis 7, bei der die Sekundärströmung (16) so ausgeprägt ist, dass mittels des Spalts (10) eine Grenzströmung an der Innenseite der Innenwand (7) ausgebildet wird, so dass eine vorrangige Benetzung der Innenwand (7) mit dem Additiv (11) reduziert wird.

9. Vorrichtung (1) nach einem der vorhergehenden Patentansprüche, bei der die äußere Strömungspassage (28) einen Katalysator (6) aufweist.

10. Vorrichtung (1) nach einem der vorhergehenden Patentansprüche, bei der in Strömungsrichtung (2) des Abgases nach der Ringstruktur (8) ein Mischabschnitt (12) für das Abgas ausgebildet ist, wobei die Innenwand (7) der Ringstruktur (8) dort hineinragt und selbst eine Mischerstruktur (17) aufweist.

11. Vorrichtung (1) nach einem der vorhergehenden Patentansprüche, bei der in Strömungsrichtung (2) des Abgases nach der Ringstruktur (8) ein katalytisch aktiver Additivreaktor (14) vorgesehen ist, in dem zugegebenes Additiv (11) mit dem Abgas reagieren kann.

12. Vorrichtung (1) nach Patentanspruch 11, bei der der Additivreaktor (14) zusätzlich nach Art eines Partikelabscheiders ausgebildet ist.

13. Kraftfahrzeug (18), aufweisend einen Motor (20), wobei das produzierte Abgas einen Turbolader (21) und nachfolgend, insbesondere unmittelbar nachfolgend, eine Vorrichtung (1) nach einem der vorhergehenden Patentansprüchen durchströmt.

## Claims

1. Device (1) for close-coupled exhaust-gas treatment, in which device an inflow portion (3), an annular structure (8) and a sleeve-shaped guide structure (5) are provided in an exhaust line (13), wherein the inflow portion (3) causes an exhaust gas to impinge obliquely on the annular structure (8), wherein by means of an inner wall (7), an inner flow passage (27) and an outer flow passage (28) are formed in the annular structure (8); wherein the inner flow passage (27) comprises a hydrolysis catalytic converter (9), wherein an additive discharger (4) is provided which can add an additive (11) into the inner flow passage (27), wherein the additive discharger (4), the guide structure (5) and the inner wall (7) are arranged, so that the metered additive (11) is admixed only to the limited secondary flow (16); **characterized in that** in flow direction (2) firstly a gap (10) is formed and then the region in which the additive (11) is mixed with the secondary flow (16), and finally the hydrolysis catalytic converter (9), wherein the guide structure (5) extends into the inner flow passage (27) of the inner wall (7) and the inner wall (7) and the guide structure (5) define the gap (10) and thereby form a throttle, in particular a labyrinth, in the inlet region of the inner flow passage (27), such that only a limited secondary flow (16) of the exhaust gas is conducted through the inner flow passage (27).

2. Device (1) as claimed in claim 1, in which the gap (10) is formed in the manner of an annular gap concentrically with respect to the inner wall (7).

3. Device (1) as claimed in claim 1 or 2, in which the guide structure (5) is formed in the manner of a sleeve and is arranged such that the inner wall (7) and the sleeve radially partially overlap.

4. Device (1) as claimed in one of the preceding claims, in which the guide structure (5) is connected with the exhaust line (13) and in particular not with the annular structure (8).

5. Device (1) as claimed in one of the preceding claims, in which the device (1) is connected to adjacent parts of the engine via flanges, in order to permit a close-coupled arrangement under the restricted spatial conditions in the engine compartment of a motor vehicle.

6. Device (1) as claimed in claim 5, in which the additive discharger (4) extends through the exhaust line (13) and is surrounded by the guide structure (5).

7. Device (1) as claimed in one of the preceding claims 5 or 6, in which the guide structure (5) is adjoined to the additive discharger (4).

8. Device (1) as claimed in one of the preceding claims 5 to 7, in which the secondary flow (16) is dimensioned such that, by means of the gap (10), a boundary flow is formed at the inner side of the inner wall (7), such that predominant wetting of the inner wall (7) with the additive (11) is reduced.

9. Device (1) as claimed in one of the preceding claims, in which the outer flow passage (28) has a catalytic converter.

10. Device (1) as claimed in one of the preceding claims, in which a mixing portion (12) for the exhaust gas is formed downstream of the annular structure (8) in the flow direction (2) of the exhaust gas, wherein the inner wall (7) of the annular structure (8) projects into said mixing portion and itself has a mixer structure (17).

11. Device (1) as claimed in one of the preceding claims, in which a catalytically active additive reactor (14) is provided downstream of the annular structure (8) in the flow direction (2) of the exhaust gas, in which additive reactor metered additive (11) can react with the exhaust gas.

12. Device (1) as claimed in claim 11, in which the additive reactor (14) is additionally formed in the manner of a particle separator.

13. Motor vehicle (18), having an engine (20), wherein the exhaust gas produced flows through a turbocharger (21) and subsequently, in particular directly subsequently, through a device (1) as claimed in one of the preceding claims.

## Revendications

1. Dispositif (1) de traitement des gaz d'échappement à proximité du moteur, dans lequel une partie d'arrivée d'écoulement (3), une structure annulaire (8) et une structure de guidage (5) réalisée en forme de douille sont prévues dans une conduite d'échappement (13), un gaz d'échappement étant incident de manière oblique sur la structure annulaire (8) au-delà de la partie d'arrivée d'écoulement (3), un passage d'écoulement intérieur (27) et un passage d'écoulement extérieur (28) étant formés dans la structure annulaire (8) à l'aide d'une paroi interne (7) ; le passage d'écoulement intérieur (27) comprenant un catalyseur à hydrolyse (9) ; un dispositif d'ajout d'additif (4) étant prévu, lequel permet d'ajouter un additif (11) dans le passage d'écoulement intérieur (27), l'ensemble constitué du dispositif d'ajout d'additif (4), de la structure de guidage (5) et de la paroi interne (7) étant réalisé de telle sorte que l'additif ajouté (11) ne soit mélangé qu'avec l'écoulement secondaire limité (16) ; **caractérisé en ce que**, dans le sens d'écoulement (2), sont formés tout d'abord un interstice (10) puis la région dans laquelle l'additif (11) se mélange avec l'écoulement secondaire (16) et enfin le catalyseur à hydrolyse (9), la structure de guidage (5) s'étendant dans le passage d'écoulement intérieur (27) de la paroi interne (7), et la paroi interne (7) et la structure de guidage (5) formant l'interstice (10) et par conséquent, dans la région d'entrée du passage d'écoulement intérieur (27), une sorte d'étranglement, en particulier un labyrinthe, de telle sorte que seulement un écoulement secondaire limité du gaz d'échappement soit guidé à travers le passage d'écoulement intérieur (27).

2. Dispositif (1) selon la revendication 1, dans lequel l'interstice (10) est formé concentriquement à la paroi interne (7) à la manière d'un interstice annulaire.

3. Dispositif (1) selon la revendication 1 ou 2, dans lequel la structure de guidage (5) est réalisée à la manière d'une douille et est disposée de telle sorte que la paroi interne (7) et la douille se recouvrent partiellement radialement.

4. Dispositif (1) selon l'une quelconque des revendications précédentes, dans lequel la structure de guidage (5) est reliée à la conduite d'échappement (13) et en particulier non pas à la structure annulaire (8).

5. Dispositif (1) selon l'une quelconque des revendications précédentes, le dispositif (1) étant raccordé par le biais de brides à des parties adjacentes du moteur, de telle sorte qu'un agencement à proximité du moteur dans le compartiment de moteur d'un véhicule automobile soit possible en cas de conditions d'espace restreint.

6. Dispositif (1) selon la revendication 5, dans lequel le dispositif d'ajout d'additif (4) s'étend à travers la conduite d'échappement (13) et est entouré par la structure de guidage (5).

7. Dispositif (1) selon la revendication 5 ou 6, dans lequel la structure de guidage (5) est jointe au dispositif d'ajout d'additif (4).

8. Dispositif (1) selon l'une quelconque des revendications 5 à 7, dans lequel l'écoulement secondaire (16) est réalisé de telle sorte qu'un écoulement limite soit formé sur le côté intérieur de la paroi interne (7) au moyen de l'interstice (10), de telle sorte qu'un mouillage prioritaire de la paroi interne (7) par l'additif (11) soit réduit.

9. Dispositif (1) selon l'une quelconque des revendications précédentes, dans lequel le passage d'écoulement extérieur (28) comprend un catalyseur (6).

10. Dispositif (1) selon l'une quelconque des revendications précédentes, dans lequel une partie de mélange (12) pour le gaz d'échappement est formée après la structure annulaire (8) dans le sens d'écoulement (2) du gaz d'échappement, la paroi interne (7) de la structure annulaire (8) y pénétrant et comprenant elle-même une structure mélangeuse (17).

11. Dispositif (1) selon l'une quelconque des revendications précédentes, dans lequel un réacteur à additif (14) à action catalytique est prévu après la structure annulaire (8) dans le sens d'écoulement (2) du gaz d'échappement, réacteur dans lequel l'additif ajouté (11) peut réagir avec le gaz d'échappement.

12. Dispositif (1) selon la revendication 11, dans lequel le réacteur à additif (14) est en outre réalisé sous forme de séparateur de particules.

13. Véhicule automobile (18), comprenant un moteur (20), le gaz d'échappement produit traversant un turbocompresseur (21) et ensuite, en particulier immédiatement après, un dispositif (1) selon l'une quelconque des revendications précédentes.
